(19) Europäisches Patentamt

European Patent Office

Office européen des brevets

(11) **EP 1 645 894 A1**

(12) **EUROPEAN PATENT APPLICATION**

(43) Date of publication:
**12.04.2006 Bulletin 2006/15**

(51) Int Cl.:
***G02B 5/20*** (2006.01)

(21) Application number: **05010064.3**

(22) Date of filing: **09.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **06.10.2004 US 960711**

(71) Applicant: **AGILENT TECHNOLOGIES, INC.(a
Delaware Corporation)
Palo Alto,
California 94360-2024 (US)**

(72) Inventors:
• **Sigalas, Mihail M.**
**Santa Clara, CA 95051 (US)**
• **Chow, Kai Cheung**
**San Jose, CA 95124 (US)**

(74) Representative: **Schoppe, Fritz et al
Patentanwälte
Schoppe, Zimmermann, Stöckeler & Zinkler
P.O. Box 246
82043 Pullach bei München (DE)**

(54) **Apparatus and method for sensing with metal optical filters**

(57) A method and apparatus for sensing with metal optical filters. Metal optical filters having perforated metallic layers exhibit cut-off frequency behavior which may be used to sense the presence of materials, even in very small amounts.

Fig. 16

**EP 1 645 894 A1**

**Description**

**BACKGROUND OF INVENTION**

Surface plasmon resonance (SPR) based sensors are typically used for measuring thin film thickness, especially in biosensor applications. In SPR applications, a prism is typically used to couple light into the surface plasmon mode of a thin metal layer, typically gold, and a photodetector is used to measure the reflection from the thin metal film. Either the incident angle of the incident light or wavelength of the incident light is varied to match the resonance condition. Because the resonance condition depends on the ambient refractive index near the metal layer, if the index of refraction of the film applied to the underside of the thin metal layer is known, measurement of the resonant incident angle or resonant wavelength can provide the thickness of the film. In typical biosensor applications, a transducing layer is first applied to the underside of the metal layer. The binding of the target analyte to the transducing layer is then determined by a shift in the resonant incident angle or resonant wavelength.

SPR typically requires prism coupling which is bulky and difficult to integrate and SPR based sensors typically require a size on the order of millimeters to have sufficient absorption length for the surface plasmon mode. SPR also does not typically allow for normal incidence which makes it more difficult to integrate the SPR sensor directly with a CMOS detector.

Recent work in SPR based sensors as described by Brolo et al in Langmuir 2004, 20, 4813, allows for normal incidence in an SPR sensor based on the enhanced light transmission through arrays of nanoholes in gold films. Here, the transmission of normally incident light through arrays of subwavelength holes is enhanced at the wavelengths that satisfy the SPR conditions given by:

$$\lambda^{SP}(i, j) = p(i^2 + j^2)^{-1/2}\left(\frac{\varepsilon_{eff}\varepsilon_m}{\varepsilon_{ff} + \varepsilon_m}\right)^{1/2} \qquad (1)$$

where p is the periodicity of the array, i and j are integers, $\varepsilon_{ff}$ is the effective dielectric constant at the metal-dielectric interface and $\varepsilon_m$ is the dielectric constant of the metal. The surface plasmon mediated transmission is several orders of magnitude higher than is expected from Bethe's law for the transmission of light through subwavelength apertures. The enhanced transmission is accompanied by strong field localization.

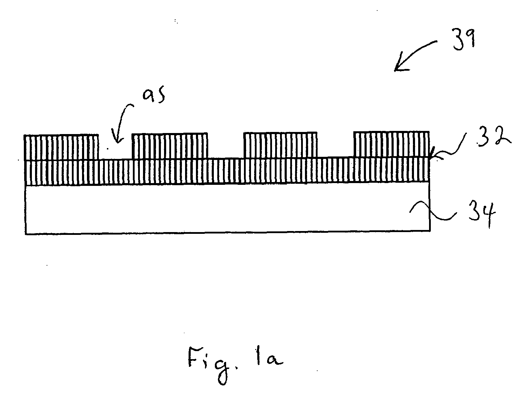

FIG. 1a shows metal grating structure 39 configured to function similarly to SPR based sensors such as those shown by Brolo et al referenced above. Gold metal layer 32 having a thickness of 0.4 $\mu$m lies over Si layer 34 having a thickness of 0.4 $\mu$m. Square holes 95 are etched into gold metal layer 32 to a depth of 0.2 $\mu$m. Square holes 35 are 0.3 $\mu$m on a side and form a square lattice with a lattice constant of 1 $\mu$m.

FIG. 1b shows reflection profile 45 for normally incident light from metal grating structure 39 with square hole 35 having a depth of 0.2 $\mu$m and covered with a material having a refractive index, n, of 1.44. Dips 50 and 55 occur in reflection profile 45 at frequencies 190 THz and 244 THz, respectively. These dips are resonances that arise from coupling to the surface plasmon mode in the metal for metal grating structure 39 with dip 50 corresponding to $\lambda \sim na$ and dip 55 corresponding to $\lambda \sim na/\sqrt{2}$ as expected from SPR considerations. The transmission is less than -80 dB. Note that there is no cut-off frequency.

**SUMMARY OF THE INVENTION**

Metal photonic bandgap (MPBG) structures with network topology have one or more equipotential metal layers that have a periodic hole structure similar to that of dielectric photonic bandgap (PBG) structures. MPBG structures have cutoff frequencies below which transmission is typically significantly attenuated. This contrasts with purely dielectric PBG structures which typically have photonic band gaps that extend over relatively narrow frequency ranges. MPBG structures with isolated metallic scatterers, see for example, Sigalas et al., Physical Review B 52, 11744, 1995 incorporated herein by reference, exhibit properties similar to dielectric structures and have no cut-off frequency.

In accordance with the invention, MPBG structures that are metal optical filters may be used as sensors for measuring the refractive index or, alternatively, the film thickness of a sample substance. The cut-off frequency of metal optical filters depends on the ambient refractive index in the holes of the metal optical filter. Therefore the thickness of a thin film with a known refractive index can be determined by measuring the cut off frequency of the metal optical filter. In biosensor applications, a transducing layer may be applied onto the surface and into the holes of the metal optical filter. The binding of the target analyte to the transducing medium is then measured by a shift in cut-off frequency.

## BRIEF DESCRIPTION OF THE DRAWINGS

FIG. 1a shows a prior art metal grating structure.

FIG. 1b shows a reflection profile for the prior art metal grating structure of FIG. 1a.

FIG. 1c shows an embodiment in accordance with the invention.

FIG 1d shows a reflection and transmission profile for the embodiment shown in FIG. 1c.

FIG. 1e shows a side view of an embodiment in accordance with the invention.

FIG. 1f shows a side view of an embodiment in accordance with the invention.

FIG. 1g shows a top view of an embodiment in accordance with the invention.

FIGs. 2a-b show reflection and transmission profiles, respectively for an embodiment in accordance with the invention.

FIGs. 3a-b show reflection and transmission profiles, respectively for an embodiment in accordance with the invention.

FIGs. 4a-b show reflection and transmission profiles, respectively for an embodiment in accordance with the invention.

FIGs. 5a-b show reflection and transmission profiles, respectively for an embodiment in accordance with the invention.

FIGs. 6a-b show reflection and transmission profiles, respectively for an embodiment in accordance with the invention.

FIGs. 7a-b show reflection and transmission profiles, respectively for an embodiment in accordance with the invention.

FIG. 8 shows a top view of an embodiment in accordance with the invention.

FIGs. 9a-b show reflection and transmission profiles, respectively for an embodiment in accordance with the invention.

FIGs. 10a-b show reflection and transmission profiles, respectively for an embodiment in accordance with the invention.

FIG. 11 shows an embodiment in accordance with the invention.

FIG 12a shows an embodiment in accordance with the invention for a measurement system using a tunable laser source.

FIG. 12b shows an embodiment in accordance with the invention for a measurement system using a broadband optical source.

FIGs .13a-b show an embodiment in accordance with the invention in top and side view, respectively.

FIG. 14 shows transmission profiles for an embodiment in accordance with the invention.

FIG. 15a shows transmission profiles for an embodiment in accordance with the invention.

FIG. 15b shows transmission profiles for an embodiment in accordance with the invention.

FIG. 16 shows a side view of an embodiment in accordance with the invention.

FIG. 17 shows transmission profiles for an embodiment in accordance with the invention.

FIG. 18 shows a multi-sensor embodiment in accordance with the invention.

FIG. 19 shows an embodiment in accordance with the invention.

FIGs. 20a-b show reflection and transmission profiles, respectively for an embodiment in accordance with the invention.

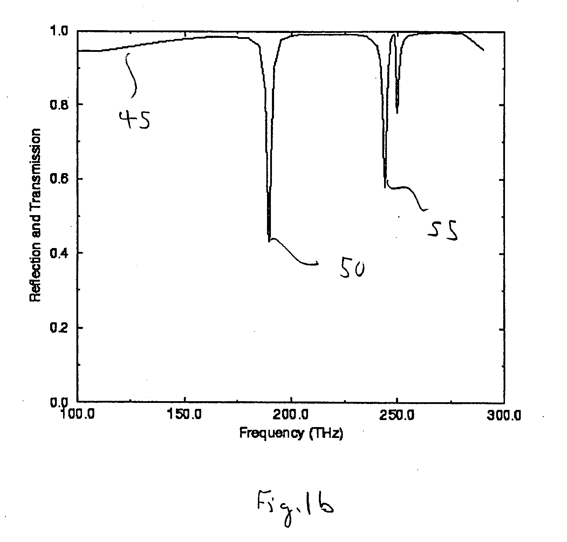

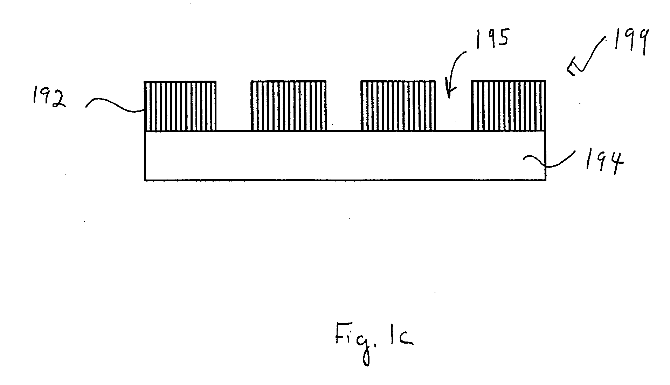

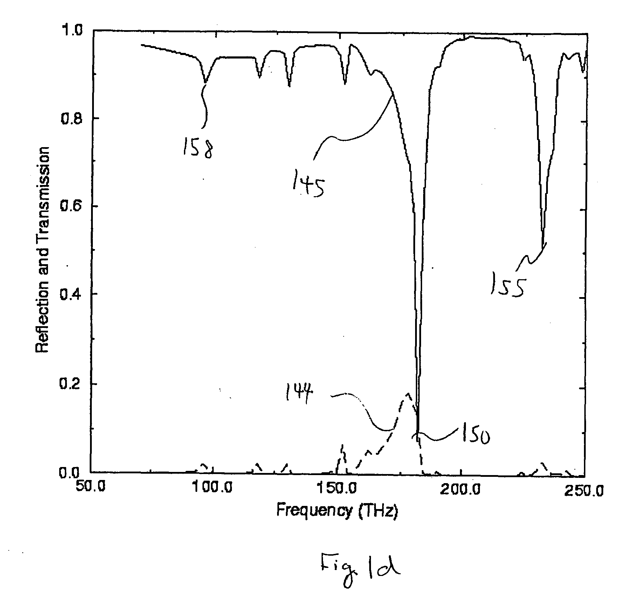

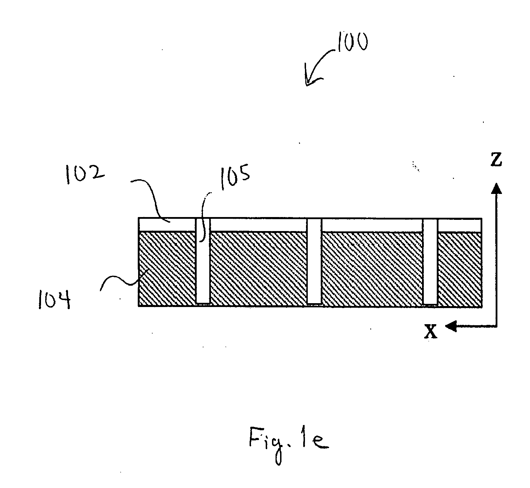

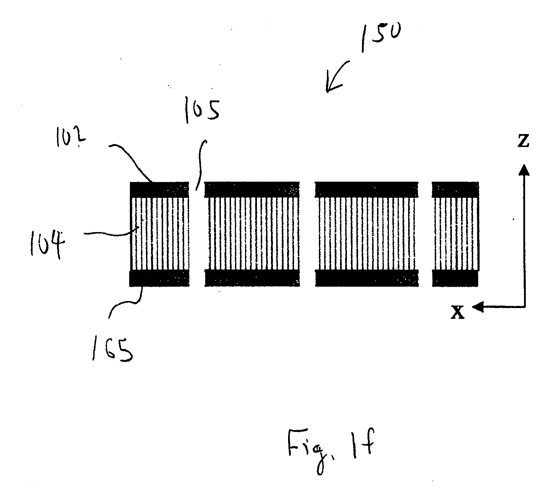

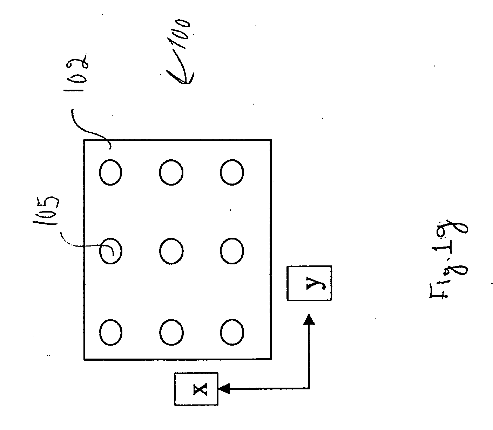

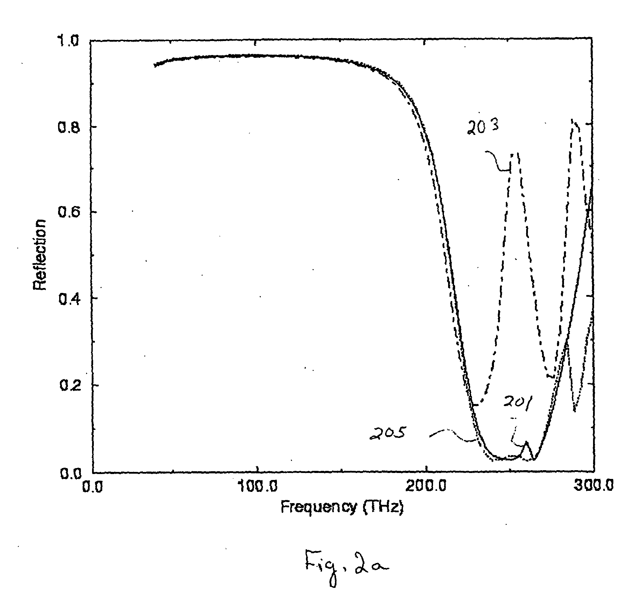

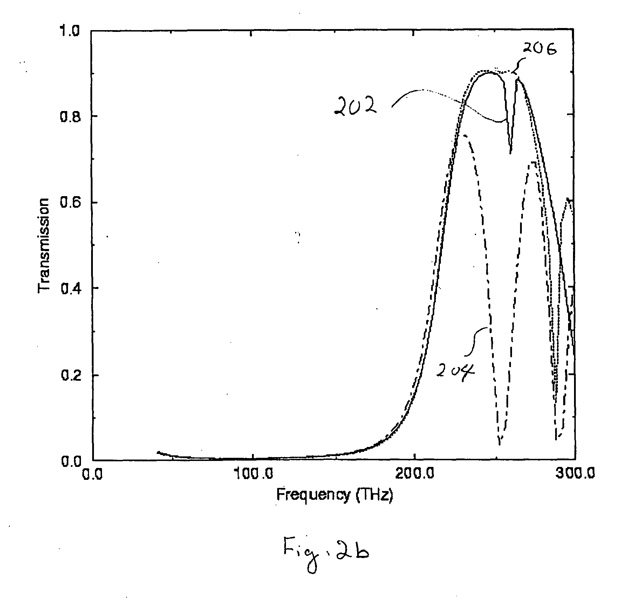

FIGs. 2 1 a-b show reflection and transmission profiles, respectively for an embodiment in accordance with the invention.

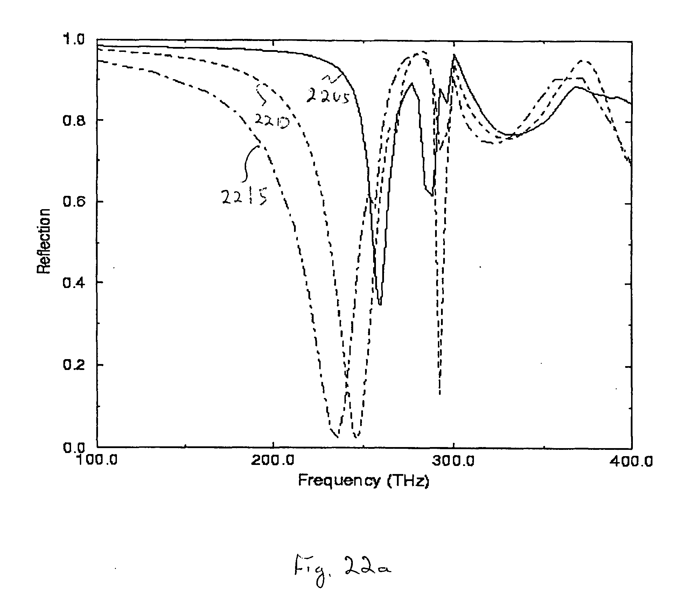

FIGs. 22a-b show reflection and transmission profiles, respectively for an embodiment in accordance with the invention.

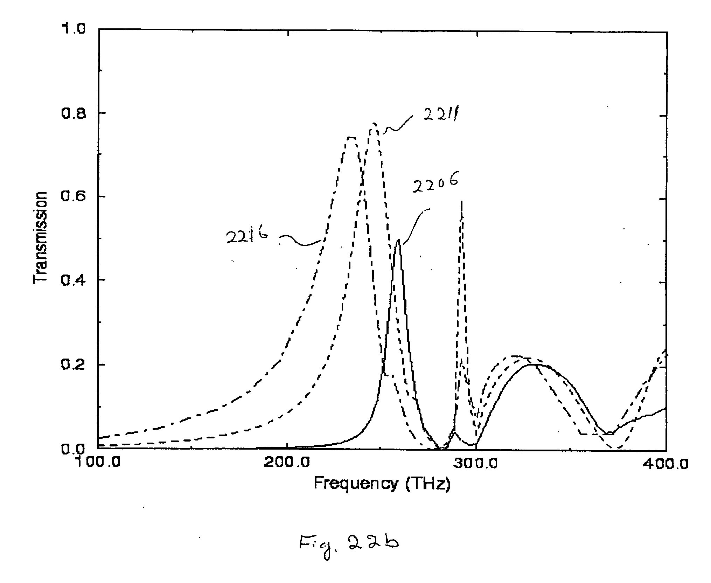

FIGs. 23a-b show reflection and transmission profiles, respectively for an embodiment in accordance with the invention.

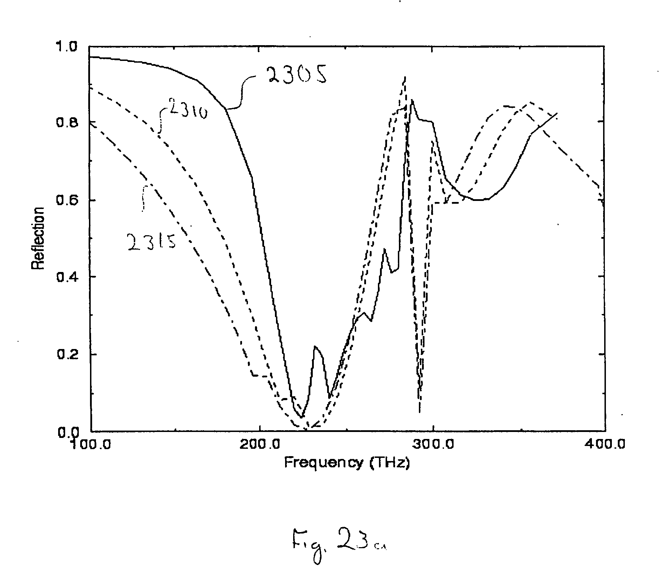

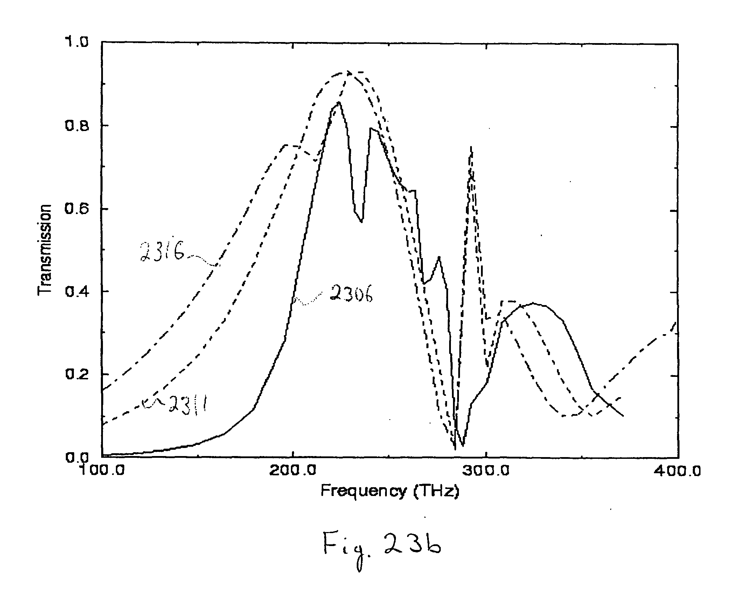

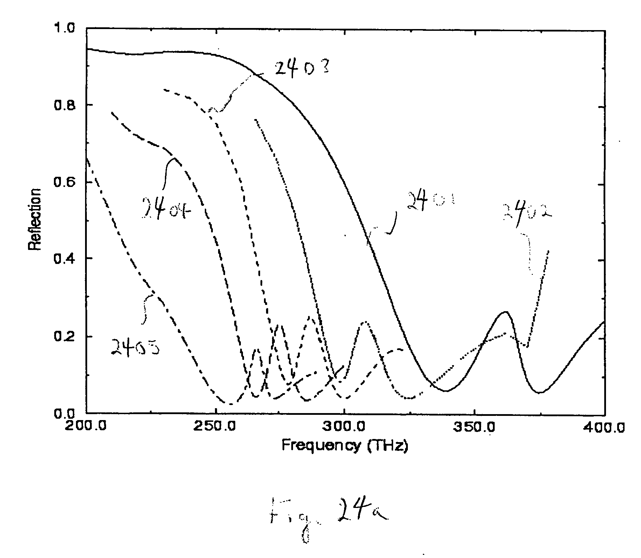

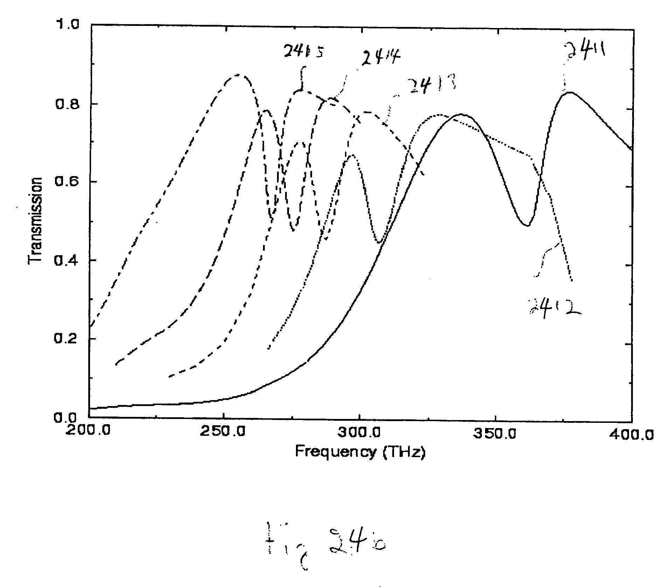

FIGs. 24a-b show reflection and transmission profiles, respectively for an embodiment in accordance with the invention.

## DETAILED DESCRIPTION OF THE INVENTION

FIG. 1c shows an embodiment in accordance with the invention. Metal optical filter 199 has gold metal layer 192 having a thickness of 0.4 $\mu$m lies over Si layer 194 having a thickness of 0.4 $\mu$m. Square holes 195 are etched into gold metal layer 192 to a depth of 0.4 $\mu$m, all the way through gold metal layer 192 so that a metal waveguide is formed. Square holes 195 are 0.3 $\mu$m on a side and form a square lattice with a lattice constant, a, of 1 $\mu$m.

FIG. 1d shows reflection profile 145 and transmission profile 144 with normally incident light for metal optical filter 199 with square holes 195 covered by a material having a refractive index, n, of 1.44. Reflection profile 145 shows reflection dip 150 at about 182 THz corresponding to reflection dip 50 of reflection profile 45 in FIG. 1b and reflection dip 155 at about 232 THz corresponding to reflection dip 55 of reflection profile 45 in FIG. 1b. However, in contrast to FIG. 1b, cut-off frequency 158 is now present at 96 THz. The cut-off frequency for metal optical filter 199 is given approximately by Eq. (2) below if it is understood that the cut-off frequency is determined by the cut-off frequency of the highest index material that surrounds the metal. Whereas the SPR related reflection dips 50 and 55 in reflection profile 45 have corresponding reflection dips 150 and 155 in reflection profile 145, there is no corresponding cut-off frequency in reflection profile 45. Hence, the cut-off frequency behavior is separate and distinct from the SPR related features and arises from the behavior of metal optical filter 199 as a metal waveguide.

In accordance with an embodiment of the invention, FIGs. 1e and 1g show metal optical filter 100 and FIG. 1f shows modified metal optical filter 150. For metal optical filter 100, metal layer 102 lies over layer 104, typically an SiO$_2$ layer, with holes 105 etched through metal layer 102 and layer 104. Holes 105 form a square lattice. Metal layer 102 may typically be made from aluminum, silver, gold, copper or iron, depending on the frequency of operation. For example, aluminum provides a well-defined cut-off in the visible spectrum and even in the low frequency ultraviolet spectrum where silver provides a less defined cut-off and gold lacks a clear cut-off frequency. Copper or iron are typically useful at frequencies less than about 200 THz. Modified metal optical filter 150 in FIG. If is similar in top view to metal optical filter 100 in FIG. 1g but has additional metal layer 165 which typically has the same composition as metal layer 102. Additional metal layer 165 functions to improve the Q of metal optical filter 150. Modified metal optical filter 150 may be placed over a low refractive index dielectric substrate (not shown).

FIGs.2a and 2b show reflection and transmission profiles, respectively, for metal optical filter 100 with the square lattice constant, a, of about 0.8μm but layer 104 is removed. Metal layer 102 has a thickness of about 0.8μm, holes 105 with a radius of 0.4a and there is air both above and below metal layer 102 and in holes 105. In FIG. 2a, reflection profile 201 shows the coefficient of reflection for incident light at an incident angle of about 0 degrees with respect to the normal to metal layer 102, reflection profile 203 shows the coefficient of reflection for incident light with TM (transverse magnetic) polarization at an incident angle of about 15 degrees with respect to the normal and reflection profile 205 shows the coefficient of reflection for incident light with TE (transverse electric) polarization of about 15 degrees with respect to the normal, all versus frequency. In FIG. 2b, transmission profile 202 shows the coefficient of transmission for incident light at an incident angle of about 0 degrees with respect to the normal to metal layer 102, transmission profile 204 shows the coefficient of transmission for incident light with TM (transverse magnetic) polarization at an incident angle of about 15 degrees with respect to the normal and transmission profile 206 shows the coefficient of transmission for incident light with TE (transverse electric) polarization of about 15 degrees with respect to the normal, all versus frequency. The reflection and transmission coefficients are computed using the transfer matrix method. For the calculations of FIGs. 2a - the dielectric constant for metal layer 102 is taken to be -48.8 + 3.2i which is the dielectric constant value for silver at 300 THz. Even though the dielectric constant of metals is frequency dependent, the results for most metals are typically not appreciably affected by taking a constant value for the dielectric constant in the calculations. Note that the square of the index of refraction is the dielectric constant for non-magnetic materials.

FIG. 2a shows that reflection increases to almost 100 percent below cut off frequency, $v_c$, approximately 240 THz and dips at $v_c$. FIG. 2b shows that transmission drops substantially below cut off frequency, $v_c$, approximately 240 THz and transmission peaks in the vicinity of $v_c$. The result for the cut-off frequency is in agreement with the approximate formula for the cut-off frequency of a single perfect metal waveguide:

$$v_c = \frac{c}{2dn} \tag{2}$$

where c is the velocity of light, n is the refractive index of the material surrounding the metal and d is the diameter of the hole. For multiple metal waveguides in a lattice structure with constant d/a, the cut-off frequncy scales inversely with a, the lattice constant.

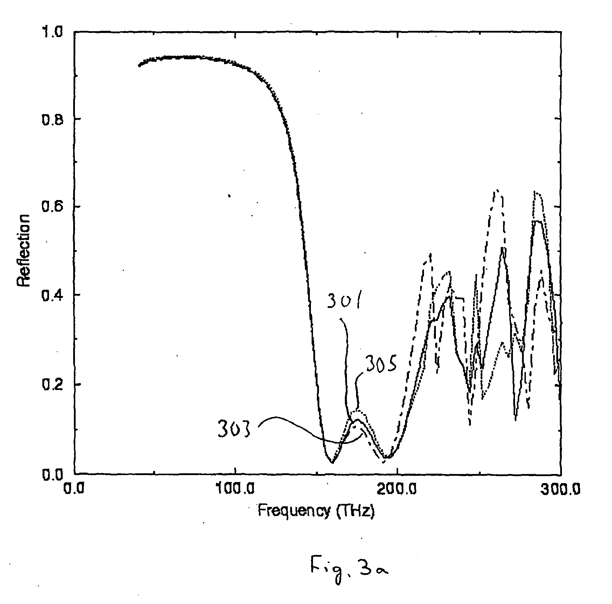

In FIG. 3 a, reflection profile 301 shows the coefficient of reflection for incident light at an incident angle of about 0 degrees with respect to the normal to metal layer 102, reflection profile 303 shows the coefficient of reflection for incident light with TM (transverse magnetic) polarization at an incident angle of about 15 degrees with respect to the normal and reflection profile 305 shows the coefficient of reflection for incident light with TE (transverse electric) polarization of about 15 degrees with respect to the normal, all versus frequency. In FIG. 3b, transmission profile 302 shows the coefficient of transmission for incident light at an incident angle of about 0 degrees with respect to the normal to metal layer 102, transmission profile 304 shows the coefficient of transmission for incident light with TM (transverse magnetic) polarization at an incident angle of about 15 degrees with respect to the normal and transmission profile 306 shows the coefficient of transmission for incident light with TE (transverse electric) polarization of about 15 degrees with respect to the normal, all versus frequency. Keeping the configuration the same as in FIGs. 2a-b but placing a material having a refractive index of about 1.4 inside holes 105 moves the cutoff frequency to about 160 THz as shown in FIG. 3b. The shift in cut-off frequency is approximately 33 percent from the configuration of FIGs. 2a-b. This shift can be used to determine the refractive index of different materials or small molecules. Comparing reflection profile 301 with reflection profile 303 and reflection profile 305 or transmission profile 302 with transmission profile 304 and transmission profile 306 shows that shows that the cut-off frequency does not change significantly by increasing the incident angle to about 15 degrees. This allows the use of simple lenses to provide for almost normal incidence. Reduced angular dependence allows the use of a small spot size while still maintaining a relatively high Q factor enabling a compact sensor size.

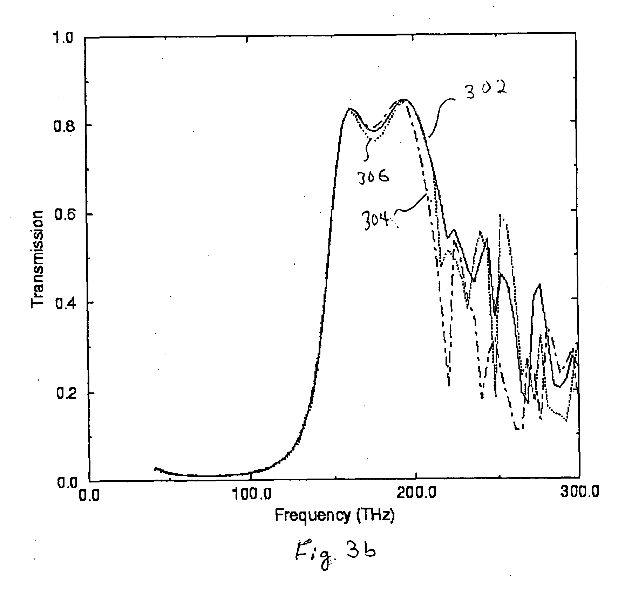

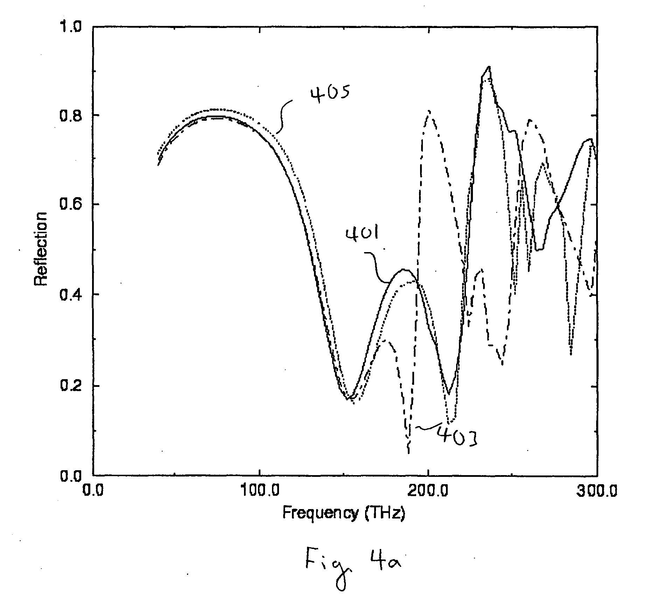

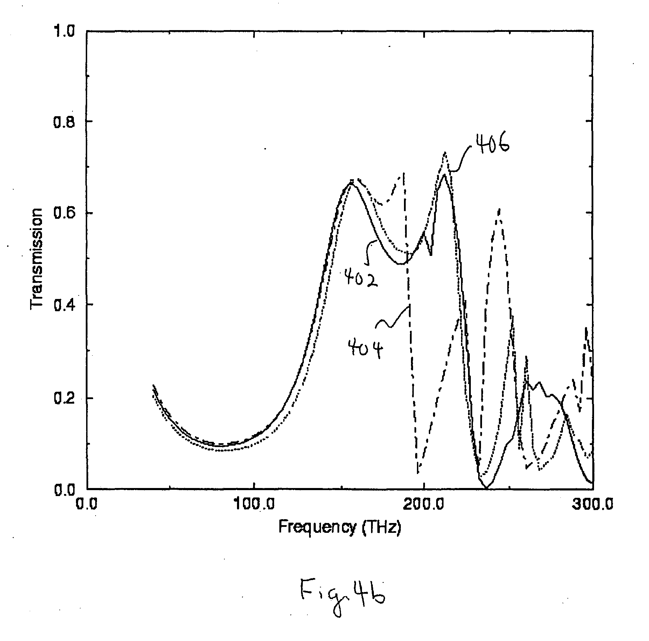

In FIG. 4a, reflection profile 401 shows the coefficient of reflection for incident light at an incident angle of about 0 degrees with respect to the normal to metal layer 102, reflection profile 403 shows the coefficient of reflection for incident light with TM (transverse magnetic) polarization at an incident angle of about 15 degrees with respect to the normal and reflection profile 405 shows the coefficient of reflection for incident light with TE (transverse electric) polarization of about 15 degrees with respect to the normal, all versus frequency. In FIG. 4b, transmission profile 402 shows the coefficient of transmission for incident light at an incident angle of about 0 degrees with respect to the normal to metal layer 102, transmission profile 404 shows the coefficient of transmission for incident light with TM (transverse magnetic) polarization at an incident angle of about 15 degrees with respect to the normal and transmission profile 406 shows the coefficient of transmission for incident light with TE (transverse electric) polarization of about 15 degrees with respect to the normal, all versus frequency. In FIGs 4a-b, $SiO_2$ layer 104 has been added below metal layer 102 with air above metal layer 102. $SiO_2$ layer 104 is taken to have a thickness of about 0.48 $\mu$m which is about 0.6 times the lattice constant, a. Other parameters are the same as for FIGs. 2a -3b. Holes 105 are filled with air and the cut off frequency is at about 158 THz as shown in FIGs. 4a-b compared to 240 THz in FIG. 2a-b without $SiO_2$ layer 104. This represents about a 33 percent shift in the transmission cut-off frequency due to the addition of $SiO_2$ layer 104.

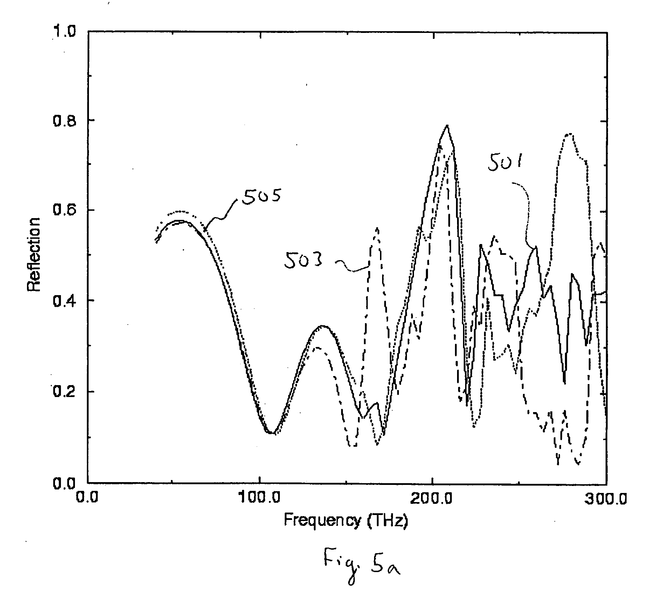

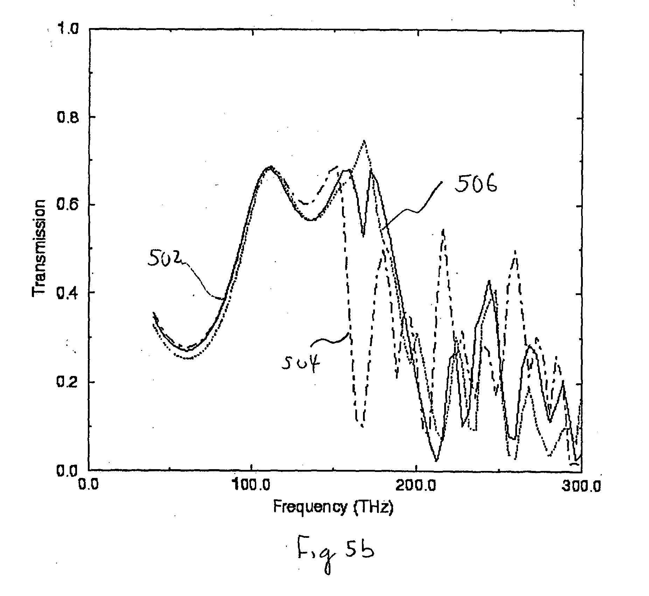

In FIG. 5a, reflection profile 501 shows the coefficient of reflection for incident light at an incident angle of about 0 degrees with respect to the normal to metal layer 102, reflection profile 503 shows the coefficient of reflection for incident light with TM (transverse magnetic) polarization at an incident angle of about 15 degrees with respect to the normal and reflection profile 505 shows the coefficient of reflection for incident light with TE (transverse electric) polarization of about 15 degrees with respect to the normal, all versus frequency. In FIG. 5b, transmission profile 502 shows the coefficient of transmission for incident light at an incident angle of about 0 degrees with respect to the normal to metal layer 102, transmission profile 504 shows the coefficient of transmission for incident light with TM (transverse magnetic) polarization at an incident angle of about 15 degrees with respect to the normal and transmission profile 506 shows the coefficient of transmission for incident light with TE (transverse electric) polarization of about 15 degrees with respect to the normal, all versus frequency. FIGs. 5a-b have the same parameters as FIGs. 4a-4b except that holes 105 are filled with a material having a refractive index of about 1.4 The cut off frequency is shifted to 110 THz as shown in FIGs. 5a-b compared to 160 THz in FIGs. 3a-b without $SiO_2$ layer 104. This represents about a 31 percent shift in the cut-off frequency due to the addition of $SiO_2$ layer 104.

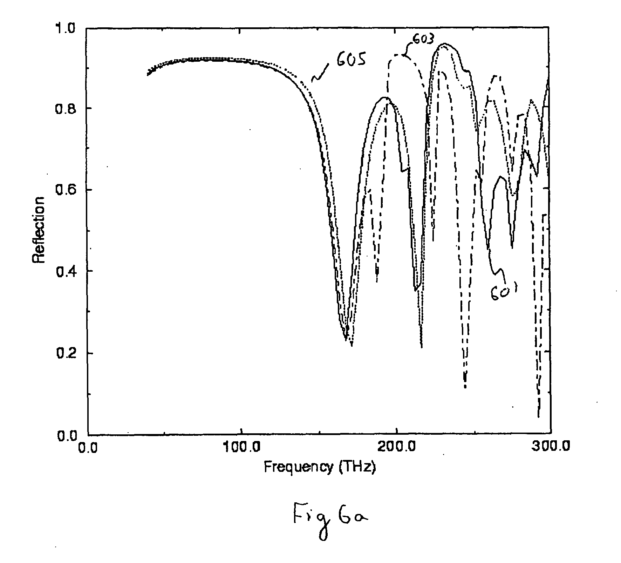

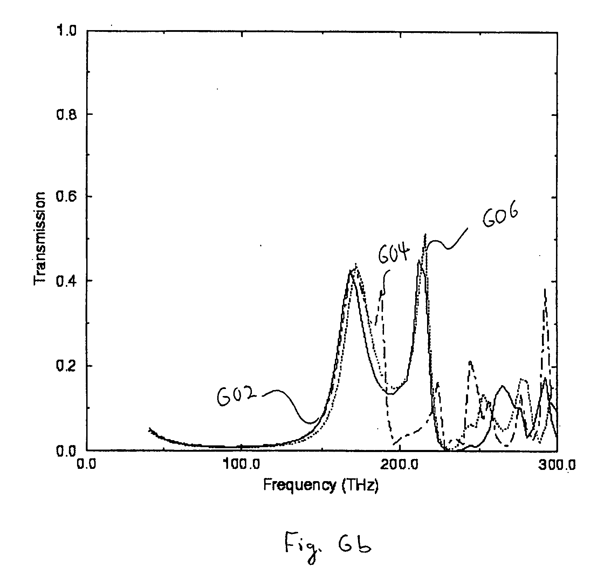

In FIG. 6a, reflection profile 601 shows the coefficient of reflection for incident light at an incident angle of about 0 degrees with respect to the normal to metal layer 102, reflection profile 603 shows the coefficient of reflection for incident light with TM (transverse magnetic) polarization at an incident angle of about 15 degrees with respect to the normal and reflection profile 605 shows the coefficient of reflection for incident light with TE (transverse electric) polarization of about 15 degrees with respect to the normal, all versus frequency. In FIG. 6b, transmission profile 602 shows the coefficient of transmission for incident light at an incident angle of about 0 degrees with respect to the normal to metal layer 102, transmission profile 604 shows the coefficient of transmission for incident light with TM (transverse magnetic) polarization at an incident angle of about 15 degrees with respect to the normal and transmission profile 606 shows the coefficient of transmission for incident light with TE (transverse electric) polarization of about 15 degrees with respect to the normal, all versus frequency. FIGs. 6a-b have the same parameters as FIGs. 4a-b except the radius of the holes is about 0.24 $\mu$m which is about 0.3 times the lattice constant a. Holes 105 with a radius of 0.24 $\mu$m are filled with air and the cut off frequency is shifted to 170 THz compared to 158 THZ in FIGs. 4a-b where holes 105 have a radius of 0.32 $\mu$m.

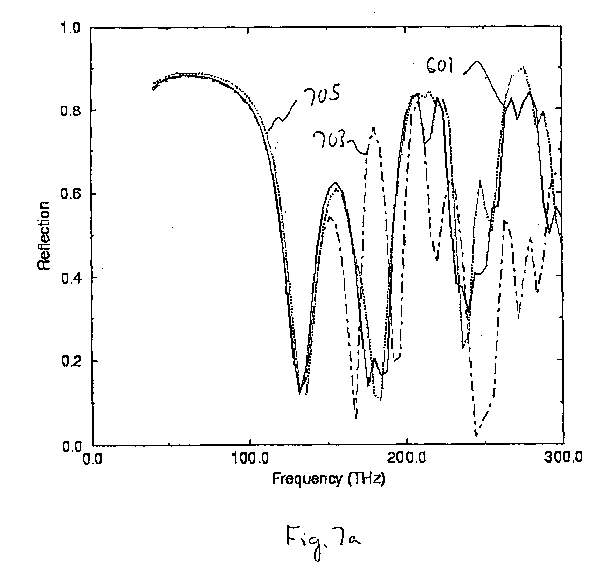

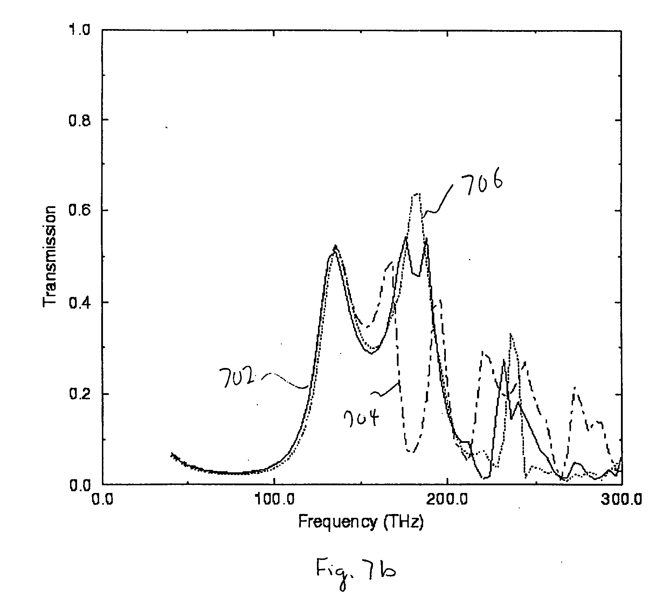

In FIG. 7a, reflection profile 701 shows the coefficient of reflection for incident light at an incident angle of about 0 degrees with respect to the normal to metal layer 102, reflection profile 703 shows the coefficient of reflection for incident light with TM (transverse magnetic) polarization at an incident angle of about 15 degrees with respect to the normal and reflection profile 705 shows the coefficient of reflection for incident light with TE (transverse electric) polarization of about 15 degrees with respect to the normal, all versus frequency. In FIG. 7b, transmission profile 702 shows the coefficient of transmission for incident light at an incident angle of about 0 degrees with respect to the normal to metal layer 102, transmission profile 704 shows the coefficient of transmission for incident light with TM (transverse magnetic) polarization at an incident angle of about 15 degrees with respect to the normal and transmission profile 706 shows the coefficient of transmission for incident light with TE (transverse electric) polarization of about 15 degrees with respect to the normal, all versus frequency. FIGs. 7a-b have the same parameters as FIGs. 6a-b except that holes 105 with a radius of 0.24 $\mu$m are filled with a material having a refractive index of 1.4. The cut off frequency is shifted to 135 THz compared to 110 THz in FIGs. 5a-b where holes 105 are filled with a material having a refractive index of 1.4 and have a radius of 0.32 $\mu$m.

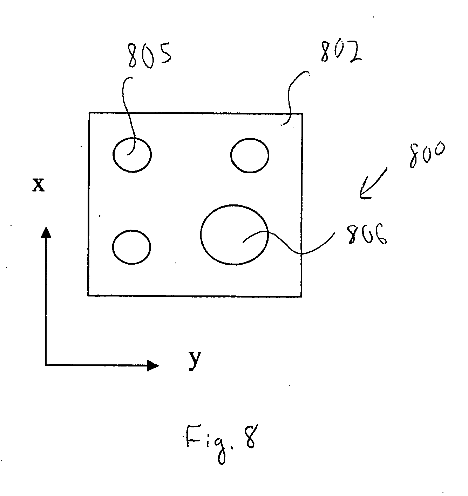

In accordance with an embodiment of the invention, FIG. 8 shows supercell 810 of metal optical filter 800 in top view. Lattice constant a is 0.8 $\mu$m. Holes 805 have a radius 0.24 $\mu$m while hole 806 has a radius of 0.32 $\mu$m. For metal optical filter 800, supercell 810 is repeated in all four planar directions. Holes 806 have a lower cut-off frequency than holes 805 so that a second lower cut-off frquency will be present in the reflection or transmision profile.

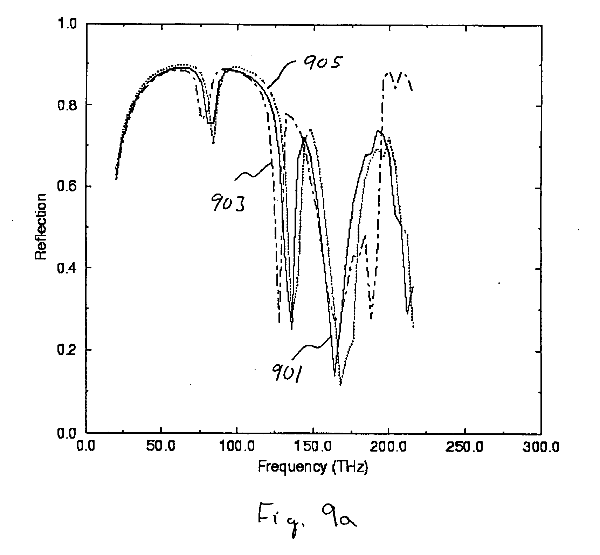

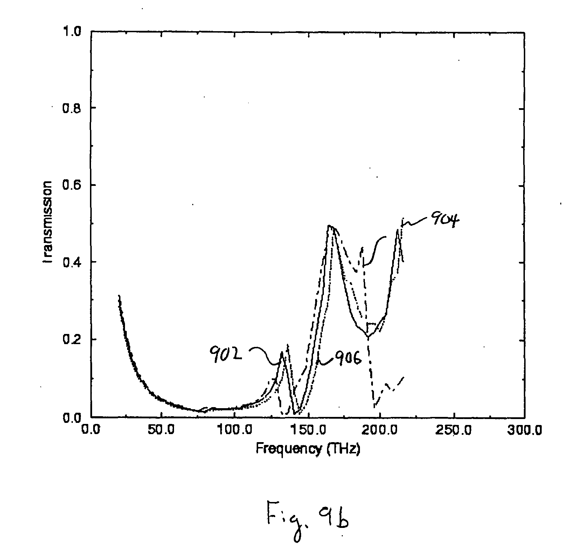

In FIG. 9a, reflection profile 901 shows the coefficient of reflection for incident light at an incident angle of about 0 degrees with respect to the normal to metal layer 802, transmission profile 903 shows the coefficient of reflection for incident light with TM (transverse magnetic) polarization at an incident angle of about 15 degrees with respect to the normal and reflection profile 905 shows the coefficient of reflection for incident light with TE (transverse electric) polarization of about 15 degrees with respect to the normal, all versus frequency. In FIG. 9b, transmission profile 902 shows the coefficient of transmission for incident light at an incident angle of about 0 degrees with respect to the normal to metal layer 902, transmission profile 904 shows the coefficient of transmission for incident light with TM (transverse magnetic) polarization at an incident angle of about 15 degrees with respect to the normal transmission profile 906 shows the coefficient of transmission for incident light with TE (transverse electric) polarization of about 15 degrees with respect to the normal, all versus frequency. Holes 805 and 806 are filled with air and FIGs. 9a-b shows a cut off frequency at about 167 THz for the embodiment in accordance with the invention of FIG. 8. The transmission peak and reflection dip at about 167 THz is close to the cutoff frequency of about 170 THz shown in FIGs. 6a-b where all holes 105 have a radius of 0.24 $\mu$m and are filled with air. FIG. 9a shows a dip in reflection at 132 THz and FIG. 9b also shows a transmission peak at about 132 THz which arise due to larger hole 806.

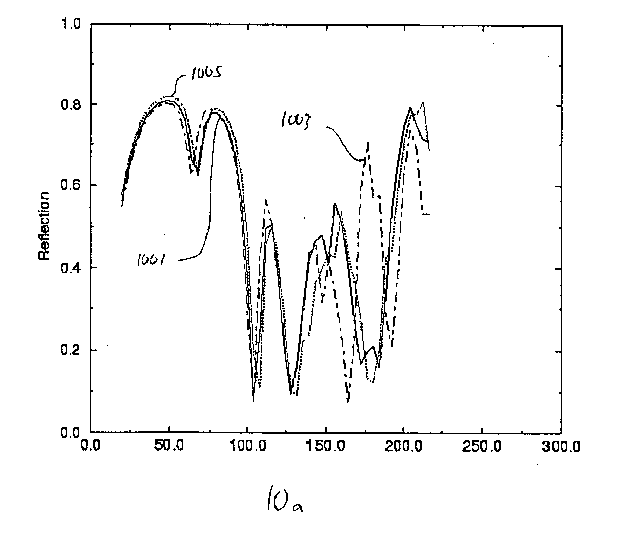

In FIG. 10a, reflection profile 1001 shows the coefficient of reflection for incident light at an incident angle of about 0 degrees with respect to the normal to metal layer 802, reflection profile 1003 shows the coefficient of reflection for incident light with TM (transverse magnetic) polarization at an incident angle of about 15 degrees with respect to the normal and reflection profile 1005 shows the coefficient of reflection for incident light with TE (transverse electric) polarization of about 15 degrees with respect to the normal, all versus frequency. In FIG. 10b, transmission profile 1002 shows the coefficient of transmission for incident light at an incident angle of about 0 degrees with respect to the normal to metal layer 802, transmission profile 1004 shows the coefficient of transmission for incident light with TM (transverse magnetic) polarization at an incident angle of about 15 degrees with respect to the normal and transmission profile 1006 shows the coefficient of transmission for incident light with TE (transverse electric) polarization of about 15 degrees with respect to the normal, all versus frequency. Holes 805 and 806 are filled with a material having a refractive index of 1.4 and FIGs. 10a-b show a cut off frequency of about 130 THz. The transmission peak of about 130 THz is close to the cut off frequency of about 135 THz shown in FIGs. 7a-b where all holes 105 have a radius of 0.24 $\mu$m and are filled with a material having a refractive index of 1.4 FIGs. 10a-b also shows a reflection dip and a transmission peak at about 104 THz which arises due to larger hole 806. In the case where a single molecule detection is desired all but one of holes 105 are typically filled with material and only one of holes 105 is open. This ensures that sensing of the molecule occurs only in hole 105. The filling material may be glass or $SiO_2$ with a refractive index of about 1.4. This moves the cut-off to lower frequencies (see Eq. 2 for the relationship between cut-off and refractive index) and the presence of the molecule in the hole 105 may not little effect at the cut-off frequency. However, increasing the size of hole as shown in FIG. 8 for hole 806 can move the cut-off (see Eq. 2) to even lower frequencies making detection possible due to the change of the cut-off in the presence of the single molecule in hole 806.

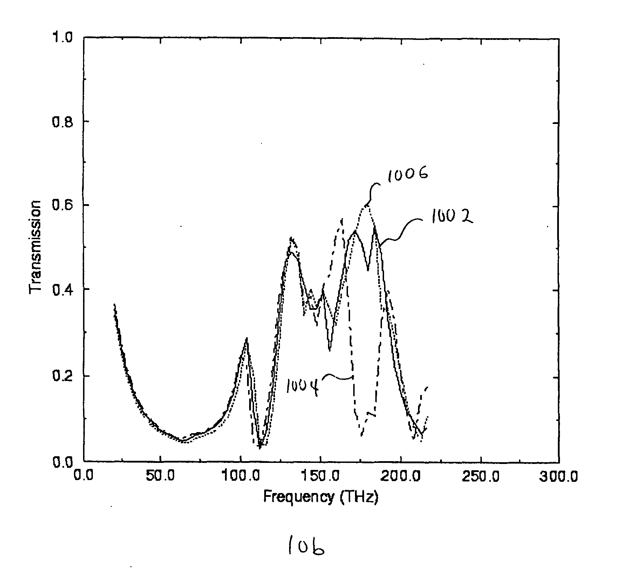

FIG. 11 shows an embodiment in accordance with the invention of filter array 1100 typically incorporating embodiments 100 and 800. Metal optical filters 1150, 1155 and 1160 have different frequency cut offs. Filter array 1100 is illuminated from the top and detectors are placed below filter array 1100. Note that filter array 1100 may be extended to an arbitrary number of metal optical filters. For example, that each metal optical filter is about 20 $\mu$m$^2$, up to 2500 metal optical filters may be arranged in a 1 mm$^2$ area.

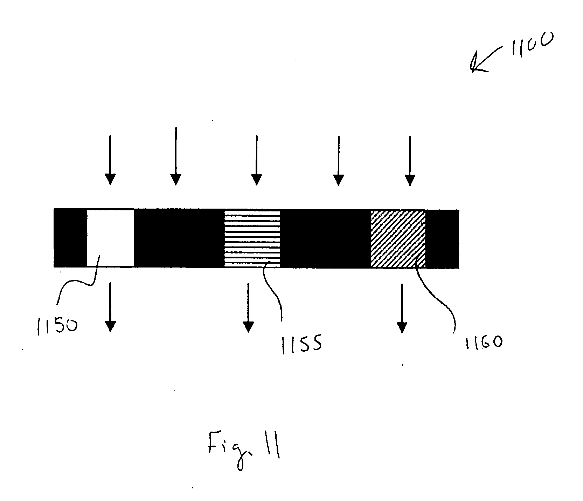

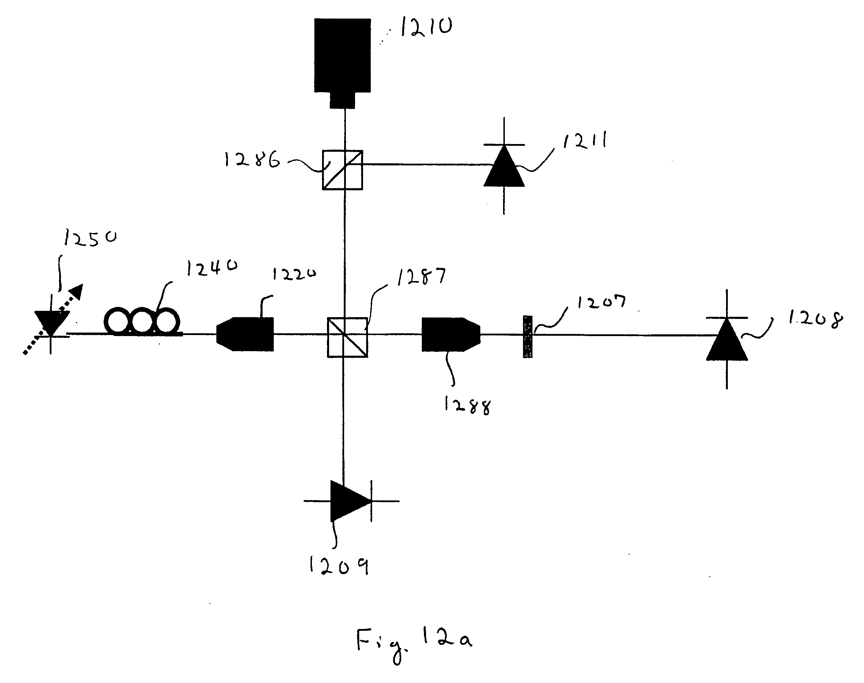

FIG. 12a shows an embodiment in accordance with the invention for a typical measurement system to measure both reflection and transmission spectra for DUT 1207. For example, DUT 1207 may be filter array 1100 or individual metal optical filters 100 and 800. Tunable laser source 1250 generates a light beam that is typically swept over a desired frequency range and that passes through polarization controller 1240 to generate the desired polarization state. Collimator 1220, which may typically be a pigtail collimator producing a beam with diameters in the range of about 1 mm to 10 mm, outputs an approximately planar wave to beamsplitter 1287 which directs a portion of the input beam to input power detector monitor 1209 and a portion of the input beam to low numerical aperture lens 1288. Collimator 1220 and low numerical aperture lens 1288 set the beam diameter appropriate for the sensing area. From low aperture numerical lens 1288 the portion of the beam goes to device under test (DUT) 1207. A portion of the beam is transmitted through DUT 1207 to transmitted power detector monitor 1208. Transmitted power detector monitor 1208 may be a single detector to monitor transmission through metal optical filters 100 or 800 or an array of detectors to monitor transmission through filter array 1100. A portion of the beam reaching DUT 1207 is reflected back to beamsplitter 1287 which directs a portion of the reflected beam to beamsplitter 1286. Beamsplitter 1286 directs a portion of the reflected beam to camera 1210 used to image DUT 1207 and a portion of the reflected beam to reflected power detector monitor 1211. Reflected power detector monitor 1211 may be a single detector to monitor reflection from metal optical filters 100 or 800 or an array of detectors to monitor reflection from filter array 1100.

FIG. 12b shows an embodiment in accordance with the invention for a typical measurement system to measure both reflection and transmission spectra for DUT 1207. For example, DUT 1207 may be filter array 1100 or individual metal optical filters 100 and 800. Broadband optical source 1251 generates a light beam that is passed through polarizer 1241 to provide a linear polarized beam. The linear polarized beam passes through collimator 1220 which may typically be a pigtail collimator producing a beam with diameters in the range of about 1 mm to 10 mm. Collimator 1220 outputs an approximately planar wave to beamsplitter 1287 which directs a portion of the input beam to input power detector monitor 1209 and a portion of the input beam to DUT 1207. A portion of the beam is transmitted through DUT 1207 to dispersive element 1298. Dispersive element 1298 may be a diffraction grating, for example. Dispersive element 1298 separates the transmitted portion of the beam into component wavelengths which are detected by transmitted power detector monitor 1208. Transmitted power detector 1208 may be a single detector to monitor transmission through metal optical filters 100 or 800 or an array of detectors to monitor transmission through filter array 1100. A portion of the beam reaching DUT 1207 is reflected back to beamsplitter 1287 which directs a portion of the reflected beam to beamsplitter 1286. Beamsplitter 1286 directs a portion of the reflected beam to camera 1210 used to image DUT 1207 and a portion of the reflected beam to dispersive element 1299. Dispersive element 1299 may be a diffraction grating, for example. Dispersive element 1299 separates the reflected portion of the beam into component wavelengths which are detected by reflected power detector monitor 1211. Reflected power detector monitor 1211 may be a single detector to monitor reflection from metal optical filters 100 or 800 or an array of detectors to monitor reflection from filter array 1100.

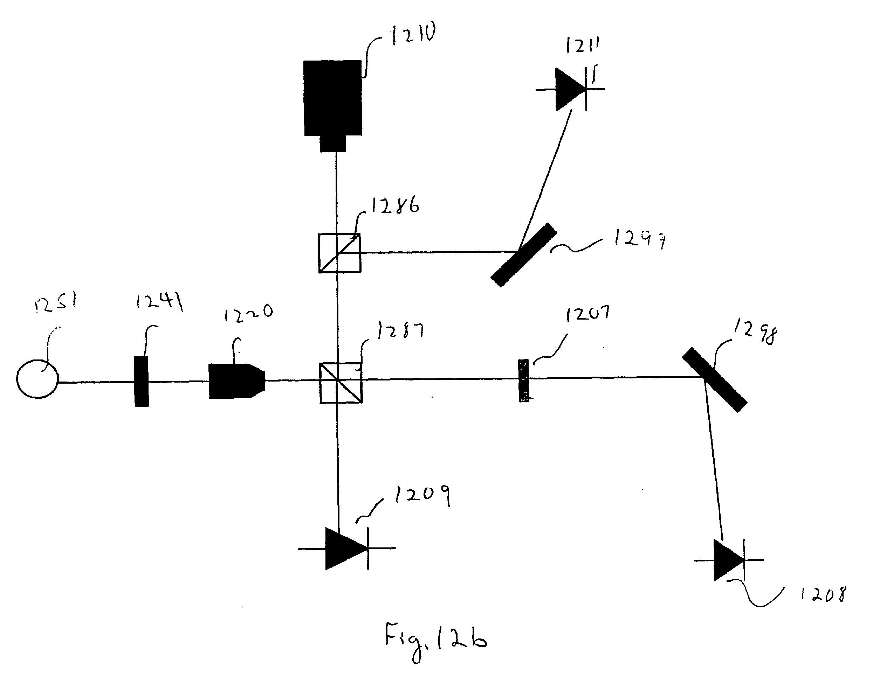

FIGs. 13a-b show an embodiment in accordance with the invention in top view and side view, respectively. Metal optical filter 1300 includes incoming waveguide 1305 and outgoing waveguide 1310, both waveguides 1305 and 1310 having width $w_d$ and thickness t. Metal plates 1315 and 1320 of length L, width $w_m$, and thickness t are positioned between incoming waveguide 1305 and outgoing waveguide 1310 as shown in FIGs. 13a-b. Metal plates 1315 and 1320 are separated by gap 1375 having width w. Insertion of materials having different refractive indices into gap 1375 changes the transmission properties of metal optical filter 1300 allowing determination of the refractive index using small samples of material.

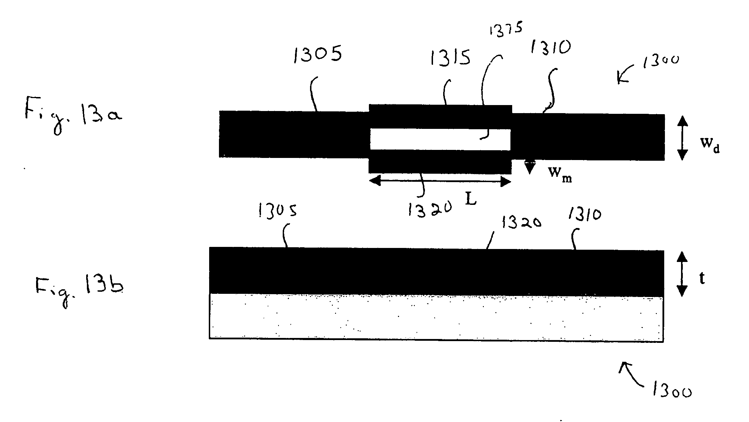

FIG. 14 shows transmission as a function of frequency through metal optical filter 1300. For the purposes of FIG. 14, metal plates 1315 and 1320 are assumed to be perfect conductors. For embodiments in accordance with the invention, metal plates 1315 and 1320 would typically be made of gold, silver or aluminum for frequencies below about 200 THz where FIG 14 is applicable for these metals. For frequencies in the range of about 400 - 700 THz or higher, FIG. 14 is no longer a good model for the performance of gold metal plates. Transmission profile 1405 shows transmission through metal optical filter 1300 when gap 1375 is filled with air and the index of refraction for waveguides 1305 and 1310 is about 3.4, $w_d \sim 1.4a$, $w_m \sim w \sim 0.5a$, $L \sim a$ and $t \sim 0.6a$. Note that the length of metal plates 1315 and 1320 provide a characteristic length analogous to the lattice spacing, a, in two dimensional metal optical filters, such as metal optical filters 100 and 800 discussed above. Transmission profile 1410 shows transmission through metal optical filter 1300 when gap 1375 is filled with a material having a refractive index of about 1.4 and the index of refraction for waveguides 1305 and 1310 is about 3.4, $w_d \sim 1.4a$, $w_m \sim w \sim 0.5a$, $L \sim a$ and $t \sim 0.6a$. Transmission profiles 1405 and 1410 are similar to the transmission profiles above for transmission through metal optical filters 100 and 800. Transmission profiles 1405 and 1410 have low transmission below a cut off frequency and a transmission peak at the cut off frequency which is 1.23 c/a for transmission profile 1405 and 0.9 c/a for transmission profile 1410. The shift in cut off frequency from transmission profile 1405 to transmission profile 1410 is about 27 percent. For transmission profile 1405, transmission is only about 4 percent at the cut off frequency because of the high index mismatch between waveguides 1305 and 1310 and the air in gap 1375. The transmission at the cut off frequency improves to 6.5 percent for transmission profile 1410 because the refractive index mismatch is decreased.

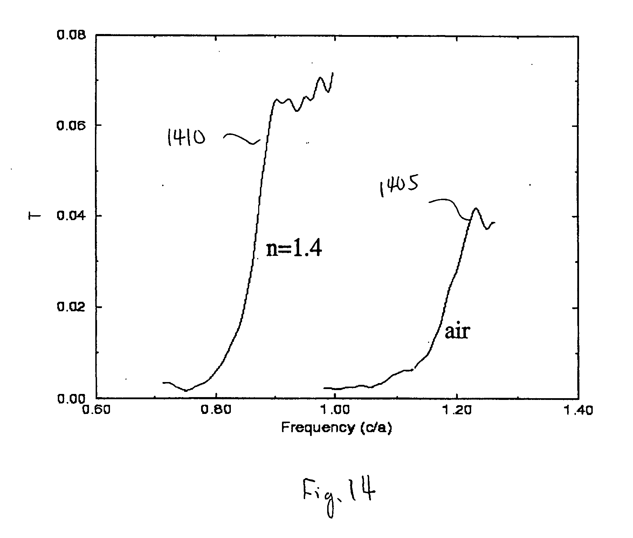

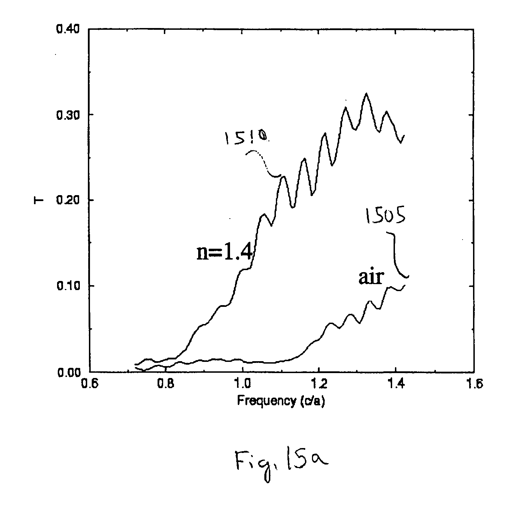

Reducing the index of refraction of waveguides 1305 and 1310 of FIGs. 13a-b from about 3.4 to about 2 while keeping all other parameters the same, increases the transmission at the cut off frequency as shown in FIG. 15a. Transmission profile 1505 and 1510 show a transmission increase to about 10 percent and 35 percent, respectively. However, the desired sharp drop off at the cut off frequency is not present in transmission profiles 1505 and 1510. Due to the reduced index of refraction contrast between waveguides 1305 and 1310 and the surrounding material, either air or other material having a refractive index of about 1.4, electromagnetic wave confinement is reduced.

FIG. 15b shows transmission as a function of frequency through metal optical filter 1300 for different values of w for gap 1375. All other values are as above for metal optical filter 1300. Transmission profile 1525 corresponds to w ~ 0.375a, transmission profile 1535 corresponds to w ~ 0.5a and transmission profile 1545 corresponds to w ~ 0.625. It is apparent from comparing transmission profiles 1525, 1535 and 1545 in FIG. 15b that the transmission is enhanced by increasing the width, w, of gap 1375.

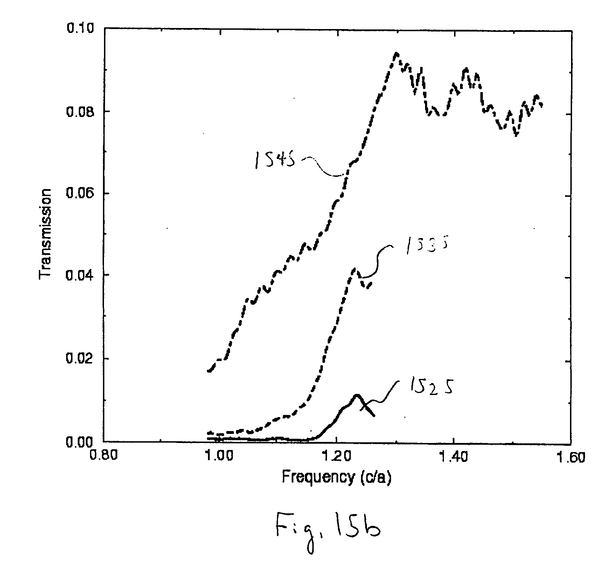

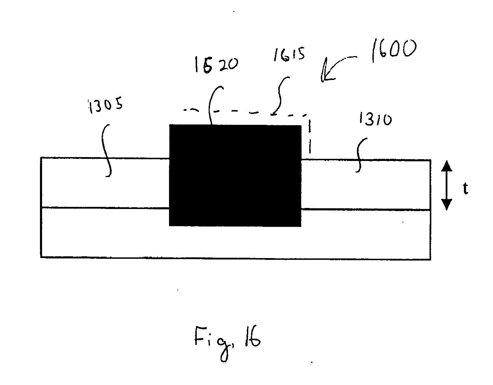

Increasing the thickness t of metal plates 1615 and 1620 as shown in side view in FIG. 16 to t ~ 1.2a for metal optical filter 1600 increases the drop off of the transmission below the cut off frequency. This is shown in FIG. 17. Transmission profile 1705 is for gap 1375 filled with air and transmission profile 1710 is for gap filled with material having a refractive index of about 1.4. Taking a ~ 1.2 $\mu$m, gives t ~ 1.44 $\mu$m and a cut off frequency of about 308 THz for transmission profile 1705 and a cut off frequency of about 225 THz for transmission profile 1710.

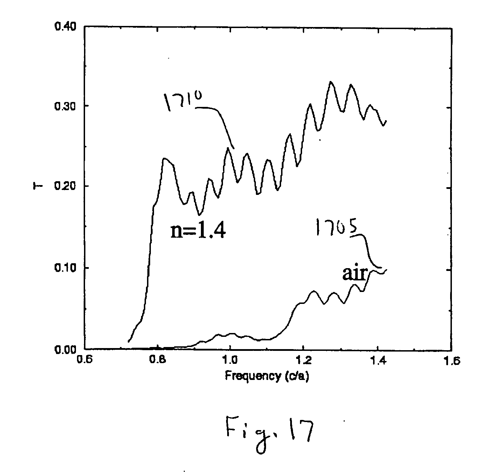

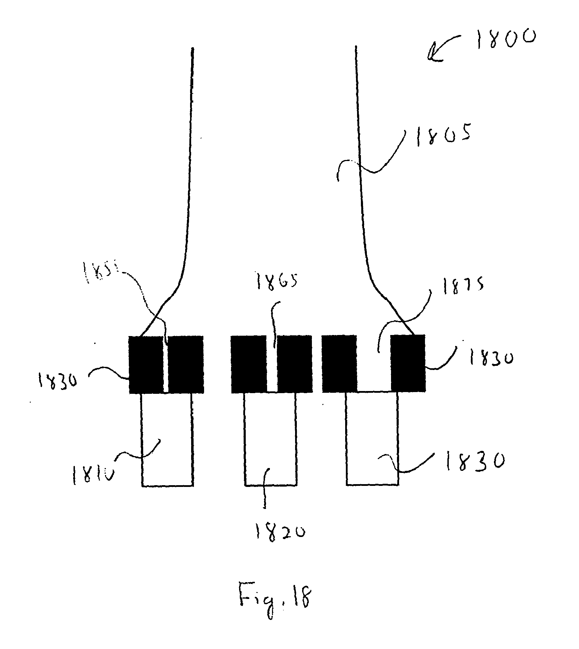

FIG. 18 shows an embodiment of multi-sensor configuration 1800 in accordance with the invention where embodiments shown in FIGs. 13a-b and 16 are combined to make multi-sensor configuration 1800. Input waveguide 1805 directs light into gaps 1855, 1865 and 1875 which may have different widths, each surrounded by metal plates 1831. Input waveguide is typically tapered to ensure that a single incident mode enters typically different sized gaps 1855, 1865 and 1875. Different modes typically have somewhat different cut off frequencies so that having more than one mode entering a gap is typically undesirable. Outgoing waveguides 1810, 1820 and 1830 typically direct the output light to suitable detectors to determine the transmission profile for each gap 1855, 1865 and 1875, respectively.

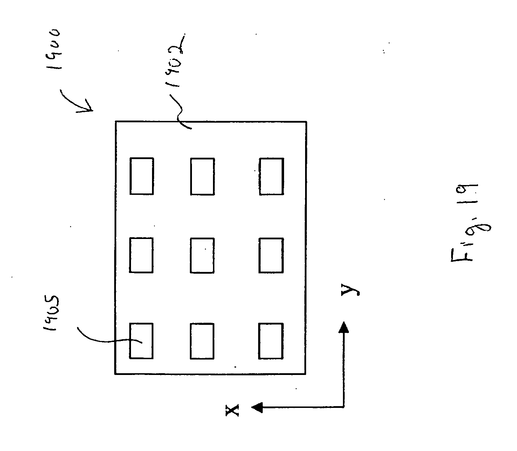

FIG. 19 shows an embodiment in accordance invention having, for example, a lattice constant of about 0.8 $\mu$m with square holes 1905 having sides of about 0.48 $\mu$m . Square holes 1905 which may also be, for example, cross-shaped, are etched into layer 1902, for example, layer 1902 may be a gold layer having a typical thickness of about 0.32 $\mu$m. Layer 1902 typically resides over an $SiO_2$ layer (not shown) with a typical thickness of about 0.48 $\mu$m.

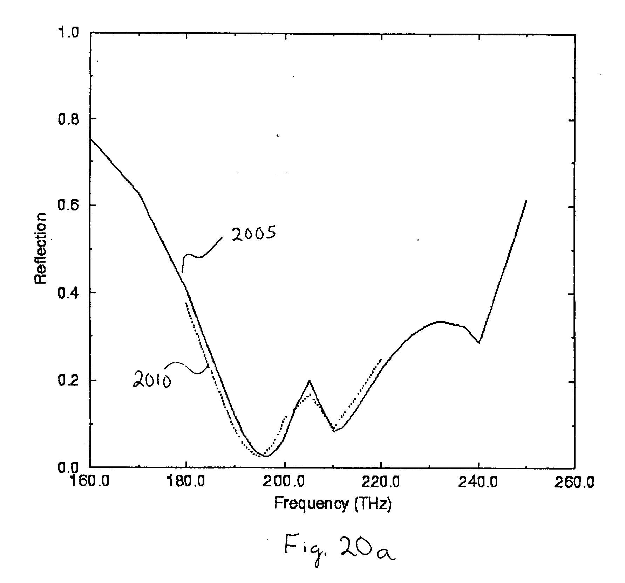

In FIG. 20a, reflection profile 2005 shows the coefficient of reflection for incident light versus frequency at an incident angle of about 0 degrees with respect to the normal to gold layer 1902 for square holes 1905 filled with a material having a refractive index of 1.4. Reflection profile 2010 shows the coefficient of reflection for incident light versus frequency at an incident angle of about 0 degrees with respect to the normal to gold layer 1902 for square holes 1905 filled with a material having a refractive index of 1.41. Note that the results for FIGs. 20a-b were obtained using a frequency dependent index of refraction for gold.

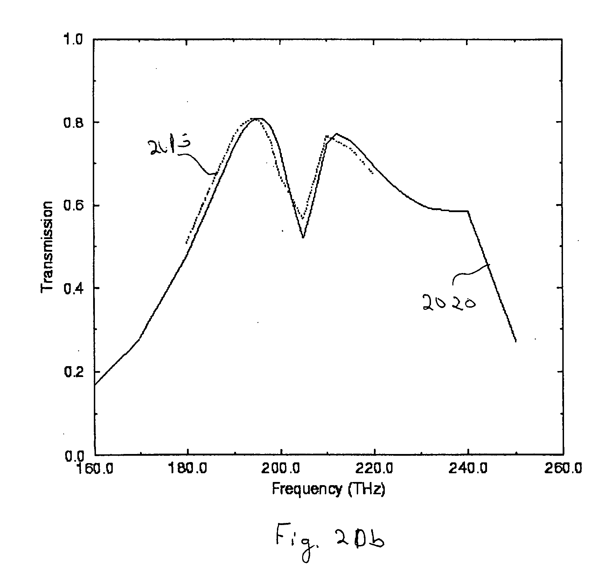

In FIG. 20b, transmission profile 2015 shows transmission for incident light 1902 versus frequency at an incident angle of about 0 degrees with respect to the normal to gold layer for square holes 1905 filled with a material having a refractive index of 1.4. The frequency cut off is at about 196.3 THz. Transmission profile 2020 shows the transmission for incident light versus frequency at an incident angle of about 0 degrees with respect to the normal to gold layer 1902 for square holes 1905 filled with a material having a refractive index of 1.41. The frequency cut off is about 195 THz. Comparing the cut off frequencies of about 196.3 THz and about 195 THz for refractive indices of 1.4 and 1.41, respectively, results in a sensitivity measure of $\Delta\lambda/\Delta N$ ~ 1000 nm. This sensitivity is typically more than four times better than that obtained from dielectrice two dimensional photonic crystal structures described in U.S. Patent Application Ser. No. 10/799,020 which have sensitivities on the order of about 200 nm. Increased sensitivity for metal optical filter 1900 arises because gold layer 1902 confines most of the light in the region close to square holes 1905 while the dielectric two dimensional photonic crystal structures confine most of the light in the dielectric region

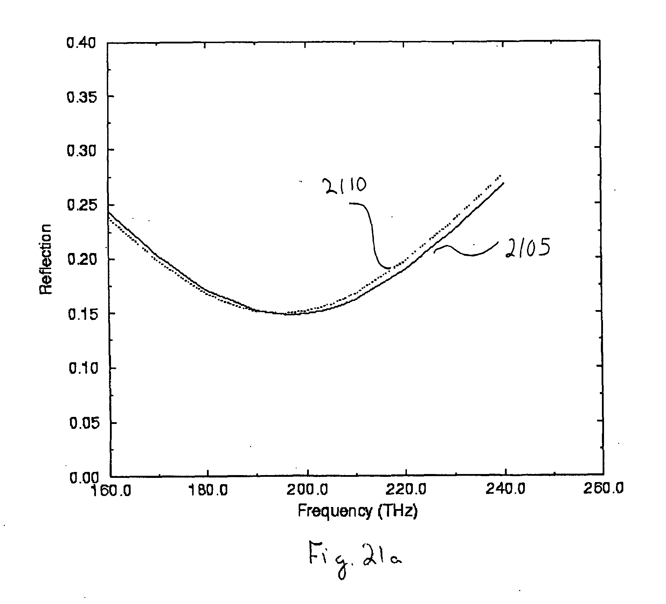

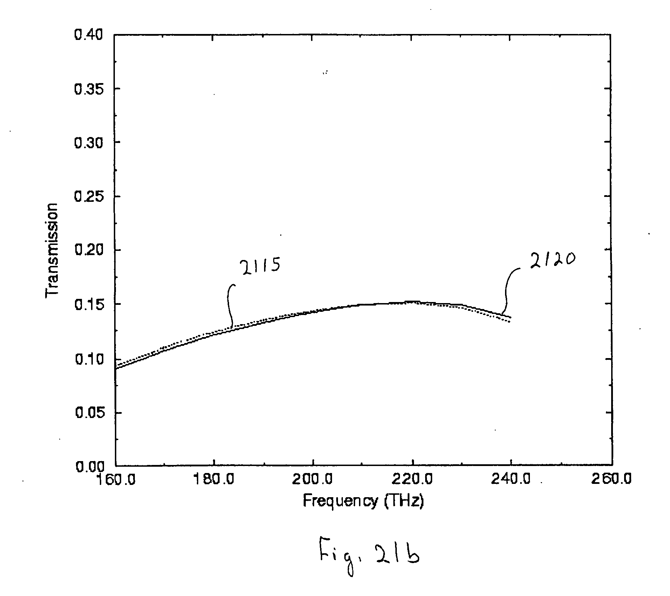

Another choice in accordance with the invention for the metal of layer 1902 is chromium. FIGs. 21 a-b show the results for chromium layer 1902 having a typical thickness of about 0.32 $\mu$m and other parameters the same as in FIG. 19. In FIG. 21 a, reflection profile 2105 shows the coefficient of reflection for incident light versus frequency at an incident angle of about 0 degrees with respect to the normal to chromium layer 1902 for square holes 1905 filled with a material having a refractive index of 1.4. Reflection profile 2110 shows the coefficient of reflection for incident light versus frequency at an incident angle of about 0 degrees with respect to the normal to chromium layer 1902 for square holes 1905 filled with a material having a refractive index of 1.41. Note that the results for FIGs. 21 a-b were obtained using a frequency dependent index of refraction for chromium. The real part of the dielectric constant of chromium increases sharply with frequency and becomes positive (metals typically have negative values of dielectric constant except in the ultraviolet region) at about 235 THz because chromium is antiferromagnetic, reaching a maximum value of 2 at about 280 THz and then decreasing to become negative again at about 350 THz.

In FIG. 21b, transmission profile 2115 shows transmission for incident light versus frequency at an incident angle of about 0 degrees with respect to the normal to chromium layer for square holes 1905 filled with a material having a refractive index of 1.4. The frequency cut off is at about 197 THz. Transmission profile 2120 shows the transmission for incident light versus frequency at an incident angle of about 0 degrees with respect to the normal to chromium layer 1902 for square holes 1905 filled with a material having a refractive index of 1.41. The frequency cut off is about 195.1THz. Comparing the cut off frequencies of about 196.3 THz and about 195 THz for refractive indices of 1.4 and 1.41, respectively, results in a shift of $\Delta\lambda/\Delta n$ = 1500 nm. Using chromium for metal layer 1902 increases the shift over the shift obtained by using gold for metal layer 1902 but the loss is significantly higher increasing the difficulty of measuring the cut-off frequency because of poor signal to noise when using a narrow band optical source. The greater shift when using chromium for metal layer 1902 is due to the sharp rise of the real part of the dielectric constant for chromium discussed above. Other materials also exhibit sharp changes in dielectric constant with frequency. For example, AlAs has a positive real part of the dielectric constant for most frequencies but at about 12 THz, AlAs material exhibits a sharp resonance due to vibration modes of the AlAs crystal structure which translate into sharp changes in the dielectric constant and the real part of the dielectric constant goes negative between 11 THz and 12 THz.

In FIGs. 22a-b, the lattice constant, a, is about 1 μm, the sides of square holes 1905 are about 0.4 μm long and square holes 1905 are filled with air. Note that the results for FIGs. 22a-b were obtained using a frequency dependent index of refraction for gold. In FIG. 22a, reflection profile 2205 shows the coefficient of reflection versus frequency for incident light at an incident angle of about 0 degrees with respect to the normal of gold layer 1902, gold layer 1902 having a thickness of about 0.4 μm. Reflection profile 2210 shows the coefficient of reflection versus frequency for light at an incident angle of about 0 degrees with respect to the normal of gold layer 1902, gold layer 1902 having a thickness of about 0.1 μm. Reflection profile 2215 shows the coefficient of reflection versus frequency for incident light at an incident angle of about 0 degrees with respect to the normal of gold layer 1902, gold layer 1902 having a thickness of about 0.05 μm.

In FIG. 22b, transmission profile 2206 shows the coefficient of transmission versus frequency for light at an incident angle of about 0 degrees with respect to the normal to gold layer 1902, gold layer 1902 having a thickness of about 0.4 μm. Transmission profile 2211 shows the coefficient of transmission versus frequency for light at an incident angle of about 0 degrees with respect to the normal of gold layer 1902, gold layer 1902 having a thickness of about 0.1 μm. Transmission profile 2216 shows the coefficient of transmission versus frequency for light at an incident angle of about 0 degrees with respect to normal of gold layer 1902, gold layer thickness 1902 having a thickness of about 0.05 μm. The quality factor (Q) is about 22 for transmission profile 2206, about 10 for transmission profile 2211 and about 7 for transmission profile 2216. This indicates that gold layers 1902 equal to or greater than about 0.4a, where a is the lattice constant, typically provide better Q factors.

In FIGs. 23a-b the lattice constant, a, is about 1 μm, the sides of square holes 1905 are about 0.6 μm long and square holes 1905 are filled with air. Note that the results for FIGs. 23a-b were obtained using a frequency dependent index of refraction for gold. In FIG. 23a, reflection profile 2305 shows the coefficient of reflection versus frequency for incident light at an incident angle of about 0 degrees with respect to the normal of gold layer 1902, gold layer 1902 having a thickness of about 0.4 μm. Reflection profile 2310 shows the coefficient of reflection versus frequency for light at an incident angle of about 0 degrees with respect to the normal of gold layer 1902, gold layer 1902 having a thickness of about 0.1 μm. Reflection profile 2315 shows the coefficient of reflection versus frequency for incident light at an incident angle of about 0 degrees with respect to the normal of gold layer 1902, gold layer 1902 having a thickness of about 0.05 μm. Comparing reflection profiles 2205, 2210 and 2215 of FIG. 22a with reflection profiles 2305, 2310 and 2315 of FIG. 23a shows that the reflection dips are less pronounced in FIG. 23a. This indicates that square holes with side lengths less than 0.4a where a is the lattice constant typically provide higher Q factors.

In FIG. 23b, transmission profile 2306 shows the coefficient of transmission versus frequency for light at an incident angle of about 0 degrees with respect to the normal to gold layer 1902, gold layer 1902 having a thickness of about 0.4 μm. Transmission profile 2316 shows the coefficient of transmission versus frequency for light at an incident angle of about 0 degrees with respect to the normal of gold layer 1902, gold layer 1902 having a thickness of about 0.1 μm. Transmission profile 2316 shows the coefficient of transmission versus frequency for light at an incident angle of about 0 degrees with respect to normal of gold layer 1902, gold layer 1902 having a thickness of about 0.05 μm. Comparing transmission profiles 2206, 2211 and 2216 of FIG. 22b with transmission profiles 2306, 2311 and 2316 of FIG. 23b shows the transmission peaks are less pronounced in FIG. 23b. This indicates that square holes with side lengths less than 0.4a where a is the lattice constant typically provide higher Q factors.

FIGs. 24a-b show transmission and reflection profiles versus frequency for the structure in FIG. 19 where layer 1902 is silver, the sides of square holes 1905 are about 0.36 μm long and the lattice constant a is about 0.6 μm. Silver layer 1902 is about 240 nm thick and is surrounded by air on both top and bottom surfaces. FIGs. 24a-b show how the reflection and transmission profiles change as film layers with a thickness of about 30 nm each and a refractive index of 1.4 are deposited on the top and bottom surfaces of silver layer 1902 and inside square holes 1905. Reflection profile 2401 and transmission profile 2411 show a cut off frequency at about 336 THz with no film present. Reflection profile 2402 and transmission profile 2412 show a cut off frequency of about 296 THz with a single film layer deposited. Reflection profile 2503 and transmission profile 2413 show a cut off frequency at about 277 THz with two film layers deposited. Reflection profile 2404 and transmission profile 2414 show a cut off frequency of about 265 THz with three film layers deposited. Reflection profile 2405 and transmission profile 2415 show a cut off frequency of about 255 THz for six film layers deposited. The first film layer of 30 nm deposited produces the largest shift in cut of frequency, from about 336 THz to 296 THz. This suggests that the electromagnetic field distribution has a maximum close to the walls of square holes 1905 and a minimum at the center. As the film layers enter weaker portions of the electromagnetic field distribution toward the center, the effect of the film layers is reduced.

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

**Claims**

1. A metal optical filter (199, 100, 150) having an optical cut-off frequency capable of functioning as a sensor comprising:

   a dielectric layer (194,104) comprising first and second surfaces that are substantially parallel; and
   a metal layer (192,102) formed on said first surface of said dielectric layer (194, 104), said metal layer (192,102) comprising holes (195,105) having a cross-section arranged to form a periodic lattice and said holes (195,105) containing a material having a refractive index such that said optical cut-off frequency of said metal optical filter is capable of being modified by changing said refractive index in said holes or changing said cross-section of said holes.

2. The apparatus of Claim 1 wherein said holes (195,105) are substantially round in cross-section.

3. The apparatus of Claim 1 wherein said holes (195,105) are substantially square in cross-section.

4. The apparatus of Claim 1 wherein said metal layer (192,102) is comprised of gold.

5. The apparatus of Claim 1 wherein said metal layer (192,102) is comprised of silver.

6. The apparatus of Claim 1 wherein said metal layer (192,102) is comprised of chromium.

7. The apparatus of Claim 1 wherein said dielectric layer (194,104) is comprised of silicon dioxide, air or other material having a refractive index less than about two.

8. The apparatus of Claim 1 wherein a first of said holes (195,105)has a larger cross-section than a remainder of said holes (195,105).

9. The apparatus of Claim 1 wherein said holes (195,105) extend through said dielectric layer (194,104).

10. The apparatus of Claim 1 further comprising a second metal layer (165) formed on said second face of said dielectric (104), said second metal layer (165) comprising said holes having said cross-section arranged to form said periodic lattice.

11. The apparatus of Claim 1 wherein said dielectric layer (194,104) is optically transparent over a range of optical frequencies.

39

as

32

34

Fig. 1a

Fig.1b

195

199

192

194

Fig. 1c

Fig 10α

Fig. 1e

Fig. 1f

Fig.19

Fig. 2a

Fig. 2b

Fig. 3a

EP 1 645 894 A1

Fig. 3b

Fig 4a

Fig 4b

EP 1 645 894 A1

Fig. 5a

EP 1 645 894 A1

Fig 5b

Fig 6a

EP 1 645 894 A1

EP 1 645 894 A1

Fig. 6b

Fig. 7a

Fig. 7b

Fig. 8

Fig. 9a

EP 1 645 894 A1

EP 1 645 894 A1

Fig. 9b

106

Fig. 11

Fig. 12a

Fig. 12b

EP 1 645 894 A1

Fig. 13a

1305    1315    1375    1310    1300

w_d

w_m

1320    L

Fig. 13b

1305    1320    1310

t

1300

Fig. 14

EP 1 645 894 A1

EP 1 645 894 A1

Fig. 15a

Fig. 15b

Fig. 16

Fig. 17

Fig. 18

Fig. 19

Fig. 20a

Fig. 20b

Fig. 21a

Fig. 21b

Fig. 22a

EP 1 645 894 A1

Fig. 22b

Fig. 23

Fig. 23b

Fig. 24a

FIG. 24b

**European Patent Office**

# EUROPEAN SEARCH REPORT

Application Number

EP 05 01 0064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KRISHNAN A ET AL: "Evanescently coupled resonance in surface plasmon enhanced transmission" OPTICS COMMUNICATIONS, NORTH-HOLLAND PUBLISHING CO. AMSTERDAM, NL, vol. 200, no. 1-6, 15 December 2001 (2001-12-15), pages 1-7, XP004326864 ISSN: 0030-4018 * abstract; figures 1-4 * * page 2 - page 3 * * page 4, line 4 - line 12 * | 1,2,4,7, 11 | G02B5/20 |
| Y | * the whole document * | 3,5,6, 8-10 | |
| D,X | BROLO ALEXANDRE G ET AL: "Surface plasmon sensor based on the enhanced light transmission through arrays of nanoholes in gold films" LANGMUIR; LANGMUIR JUN 8 2004, vol. 20, no. 12, 8 June 2004 (2004-06-08), pages 4813-4815, XP002357152 * abstract; figures 1-3 * * page 4813 - page 4814 * | 1,2,4,7, 11 | |
| Y | * the whole document * | 3,5,6, 8-10 | TECHNICAL FIELDS SEARCHED (IPC) G02B G01N |
| Y | WO 03/019245 A (UNIVERSITE LOUIS PASTEUR; CENTRE NATIONAL DE LA RECHERCHE SCIENTIFIQUE) 6 March 2003 (2003-03-06) * page 5, line 33 - page 6, line 5; figures 20,23 * * page 11, line 3 - page 12, line 25 * * page 30, line 16 - page 31, line 31 * | 3,5,6 | |

-/--

The present search report has been drawn up for all claims

| Place of search | Date of completion of the search | Examiner |
|---|---|---|
| Munich | 2 December 2005 | Blau, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 645 894 A1

| | European Patent Office | EUROPEAN SEARCH REPORT | Application Number EP 05 01 0064 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 274 293 B1 (GUPTA SANDHYA ET AL) 14 August 2001 (2001-08-14) * column 12, line 48 - line 56; figures 4,8,17,18,28,29 * * column 18, line 12 - line 49 * * column 21, line 8 - line 40 * ----- | 8,10 | |
| Y | US 6 633 427 B1 (KOSCIELNIAK WACLAW C) 14 October 2003 (2003-10-14) * abstract; figure 3 * * column 1, line 14 - line 20 * * column 3, line 19 - line 58 * ----- | 9 | |
| Y | US 2004/045932 A1 (KOCHERGIN VLADIMIR ET AL) 11 March 2004 (2004-03-11) * abstract; figure 13a * * paragraph [0139] * ----- | 9,10 | |
| D,A | SIGALAS M M ET AL: "METALLIC PHOTONIC BAND-GAP MATERIALS" PHYSICAL REVIEW, B. CONDENSED MATTER, AMERICAN INSTITUTE OF PHYSICS. NEW YORK, US, vol. 52, no. 16, 15 October 1995 (1995-10-15), pages 11744-11751, XP000616824 ISSN: 0163-1829 * equation 2 * * paragraph [0002] * ----- | 1,8 | TECHNICAL FIELDS SEARCHED (IPC) |

The present search report has been drawn up for all claims

| Place of search | Date of completion of the search | Examiner |
|---|---|---|
| Munich | 2 December 2005 | Blau, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

57

## ANNEX TO THE EUROPEAN SEARCH REPORT
## ON EUROPEAN PATENT APPLICATION NO.

EP 05 01 0064

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2005

| Patent document cited in search report | | Publication date | Patent family member(s) | | Publication date |
|---|---|---|---|---|---|
| WO 03019245 | A | 06-03-2003 | NONE | | |
| US 6274293 | B1 | 14-08-2001 | NONE | | |
| US 6633427 | B1 | 14-10-2003 | US 6795231 B1 | | 21-09-2004 |
| US 2004045932 | A1 | 11-03-2004 | NONE | | |

EPO FORM P0459